## Europäisches Patentamt
## European Patent Office
## Office européen des brevets

(19)

(11) Veröffentlichungsnummer: **0 072 023**

**B1**

(12) # EUROPÄISCHE PATENTSCHRIFT

(45) Veröffentlichungstag der Patentschrift:
19.04.89

(51) Int. Cl.⁴: **G 01 M 3/02**, G 01 M 3/26

(21) Anmeldenummer: **82107216.2**

(22) Anmeldetag: **10.08.82**

(54) **Prüfgerät für Rohrleitungen oder andere auf Dichtigkeit zu prüfende Hohlräume.**

(30) Priorität: **11.08.81 DE 8123556 U**

(43) Veröffentlichungstag der Anmeldung:
**16.02.83 Patentblatt 83/7**

(45) Bekanntmachung des Hinweises auf die Patenterteilung:
**19.04.89 Patentblatt 89/16**

(84) Benannte Vertragsstaaten:
**DE FR GB IT**

(56) Entgegenhaltungen:
**DE-U-7 621 029**
**DE-U-8 007 241**
**US-A-2 446 219**

**"Kfz-Betrieb und Automarkt", 11. Nov. 1974**

(73) Patentinhaber: **Dagn, Josef, Schwendter- Strasse 231a, A-6345 Kössen (Tirol) (AT)**

(72) Erfinder: **Dagn, Josef, Schwendter- Strasse 231a, A-6345 Kössen (Tirol) (AT)**

(74) Vertreter: **Klingseisen, Franz, Dipl.- Ing., Dr. F. Zumstein sen. Dr. E. Assmann Dr. R. Koenigsberger Dr. F. Zumstein jun. Dipl.- Ing. F. Klingseisen Bräuhausstrasse 4, D-8000 München 2 (DE)**

## Beschreibung

Die Erfindung betrifft ein Prüfgerät für Rohrleitungen und andere, auf Dichtigkeit zu prüfende Hohlräume, nach dem Oberbegriff des Anspruchs 1.

Ein derartiges Prüfgerät ist aus der DE-U-8 007 241 bekannt, wobei dieses Prüfgerät z. B. zum Prüfen der Dichtigkeit von Kraftfahrzeugkühlern vorgesehen ist.

Der Erfindung liegt die Aufgabe zugrunde, ein Prüfgerät dieser Art so auszubilden, daß es zum Prüfen verschiedener Parameter, beispielsweise des Kühlsystems eines Kraftfahrzeugs, eingesetzt werden kann, wobei insbesondere durch den abnehmbaren Anschluß einer CO-Prüfvorrichtung die Dichtigkeit des Kühlsystems gegenüber den Zylindern einer Brennkraftmaschine in einfacher Weise überprüft werden kann.

Diese Aufgabe wird durch die Merkmale im Kennzeichen des Anspruchs 1 gelöst.

Aus DE-U-7 621 029 und US-A-2 446 219 ist zwar ein Aufsatzteil mit Manometer für einen Gummistopfen bzw. ein an das Kühlsystem eines Kraftfahrzeugs anschließbares Prüfgerät mit Manometer und Luftpumpe bekannt.

Vorteilhafte Ausgestaltungen der Erfindung sind in den weiteren Ansprüchen angegeben, wobei die Ausgestaltungen nach den Ansprüchen 3 bis 7 eine Anpassung des Prüfgerätes an unterschiedlich gestaltete Öffnungen ermöglichen, in die das Prüfgerät eingesetzt werden muß.

Beispielsweise Ausführungsformen nach der Erfindung werden nachfolgend anhand der Zeichnung näher erläutert. Es zeigen

Fig. 1    in einer Seitenansicht das Prüfgerät mit Aufsatzteil,

Fig. 2    das Aufsatzteil in einer Draufsicht und in einer Seitenansicht,

Fig. 3    schematisch eine am Aufsatzteil anschließbare CO-Prüfvorrichtung,

Fig. 4    eine abgewandelte Ausführungsform des Gummistopfens mit Teilansichten in Fig. 4a und 4b,

Fig. 5    eine andere Ausführungsform des Gummistopfens, und

Fig. 6    eine weitere Ausführungsform des Gummistopfens mit einer Teilansicht in Fig. 6a.

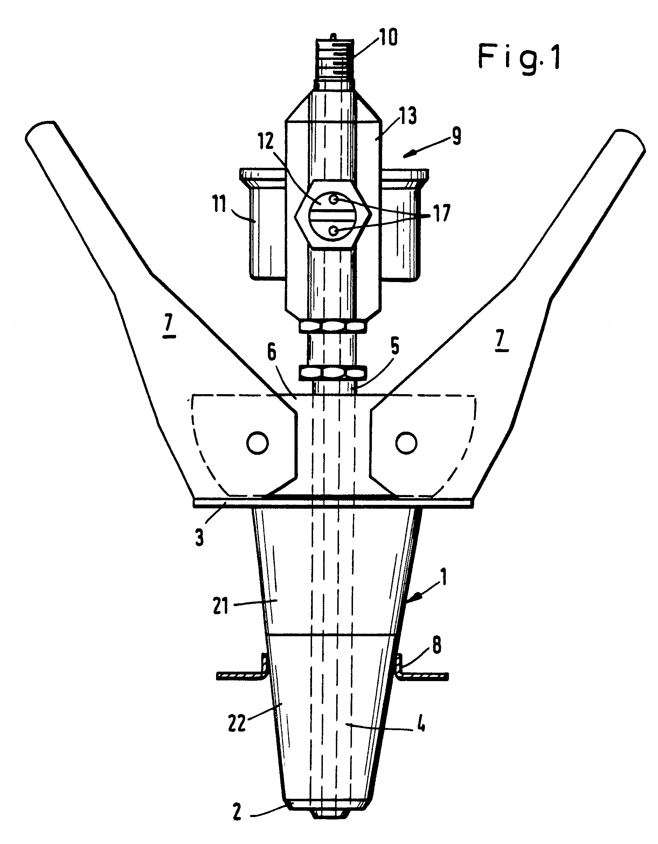

In Fig. 1 ist mit 1 ein konischer Gummistopfen bezeichnet, an dessen gegenüberliegenden Enden jeweils eine Auflageplatte 2 bzw. 3 angeordnet ist, die vorzugsweise aus Metall besteht. Durch den Gummistopfen 1 verläuft eine Rohrleitung 4, die mit der unteren Auflageplatte 2 fest verbunden und durch die obere Auflageplatte 3 verschiebbar geführt ist. Auf dem über die obere Auflageplatte 3 vorstehenden Abschnitt 5 ist die Rohrleitung mit einem Außengewinde versehen, auf dem ein Lagerbock 6 aufgeschraubt ist. Diametral gegenüberliegend sind an dem Lagerbock 6 Exzenterhebel 7 angelenkt, die auf der oberen Auflageplatte 3 aufliegen. Durch Verschwenken der Exzenterhebel 7 in Fig. 1 nach unten wird die obere Auflageplatte 3 relativ zur Rohrleitung 4 nach unten gedrückt, wobei der Gummistopfen 1 zum Abdichten einer bei 8 schematisch angedeuteten Öffnung aufgeweitet wird.

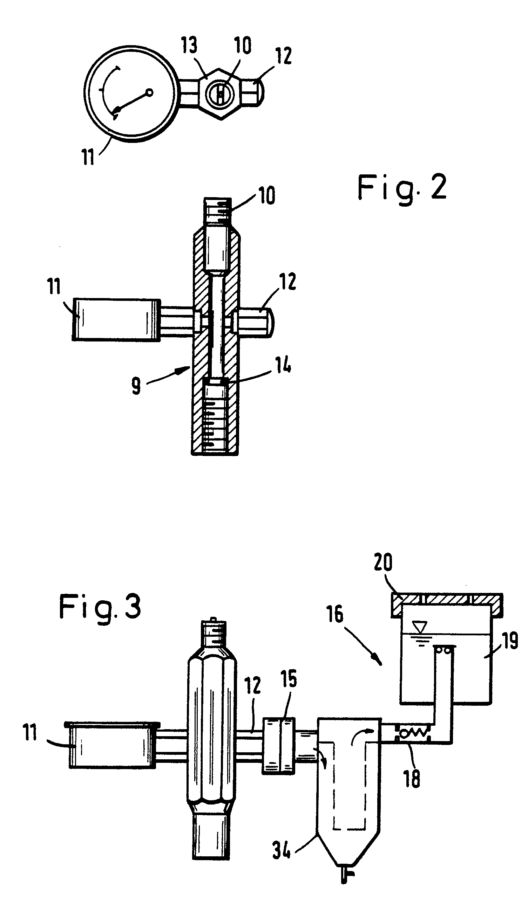

Auf dem Abschnitt 5 der Rohrleitung 4 ist über ein abgewinkeltes Kniestück oder ein gerades Verbindungsstück ein Aufsatzteil 9 aufgeschraubt, das durch eine Rohrleitung gebildet ist, an deren freiem Ende ein übliches Luftreifenventil 10 eingesetzt ist. An diametral gegenüberliegenden Stellen ist ein Manometer 11 und ein Überdruckventil 12 in eine Querbohrung des Aufsatzteils 9 eingeschraubt. Die Rohrleitung ist wenigstens auf einem Abschnitt mit einem Sechskantprofil 13 versehen, damit es mit einem Schraubschlüssel aufgeschraubt werden kann. Wie Fig. 2 zeigt, ist eine Ringdichtung 14 zum Abdichten des Aufsatzteils gegenüber dem Leitungsabschnitt 5 vorgesehen. Am Überdruckventil 12 und am Manometer 11 ist ebenfalls ein Sechskantprofil vorgesehen.

Nach dem Einsetzen des Gummistopfens 1 in die Öffnung 8 eines auf Dichtigkeit zu prüfenden Hohlraumes und Verschwenken der Exzenterhebel 7 kann am Ventil 10 Druckluft eingeleitet werden. Das Manometer 11 zeigt den Prüfdruck und ein eventuelles Absinken des Prüfdrucks nach einer gewissen Zeit an. Das Überdruckventil 12 ist auf einen maximalen Prüfdruck eingestellt, der eine Beschädigung der mit Druck beaufschlagten Teile verhindert. Das Prüfgerät ist insbesondere für Kühler von Kraftfahrzeugen, für Rohrleitungen und dergl. geeignet.

Bei der Ausführungsform nach Fig. 3 ist am Überdruckventil 12 eine Schnellkupplung 15 vorgesehen, mittels der eine CO-Prüfvorrichtung 16 an das Überdruckventil angeschlossen werden kann. Die Abblasöffnung des Überdruckventils (17 in Fig. 1) mündet in die CO-Prüfvorrichtung 16. Die aus dem Überdruckventil 12 ausströmende Luft durchströmt einen Wasserabscheider 34 und gelangt über ein Rückschlagventil 18 in einen mit einer Prüfflüssigkeit gefüllten Behälter 19, der durch eine Abdeckung 20 mit Entlüftungsöffnungen abgeschlossen ist. Bei Auftreten eines gewissen Anteils von CO in der aus dem Überdruckventil 12 ausströmenden Luft verfärbt sich die Prüfflüssigkeit 19. Anstelle der Prüfflüssigkeit kann auch ein anderes Prüfmedium vorgesehen werden.

Bei der Ausführungsform nach Fig. 1 ist der Gummistopfen 1 aus zwei Abschnitten 21 und 22 zusammengesetzt, die eine unterschiedliche Härte aufweisen. Der obere, im Durchmesser größere Abschnitt 21 besteht aus einem weicheren Gummimaterial, während der untere, im Durchmesser kleinere Abschnitt 22 aus einem härteren Gummimaterial besteht. Durch diese Aufteilung in wenigstens zwei Abschnitte mit unterschiedlicher Härte wird eine gleichmäßigere Aufweitung des Gummistopfens über seine gesamte Länge erzielt. Die in Fig. 1 wiedergegebene Ausführungsform eines Gummistopfens 1 eignet sich insbesondere zum Prüfen von Zylinderköpfen von Kraftfahrzeugen.

Der Gummistopfen 1 nach Fig. 1 hat über seine ganze Länge eine gleiche Konizität. Es ist aber auch möglich, einzelne Abschnitte mit unterschiedlicher Konizität auszubilden.

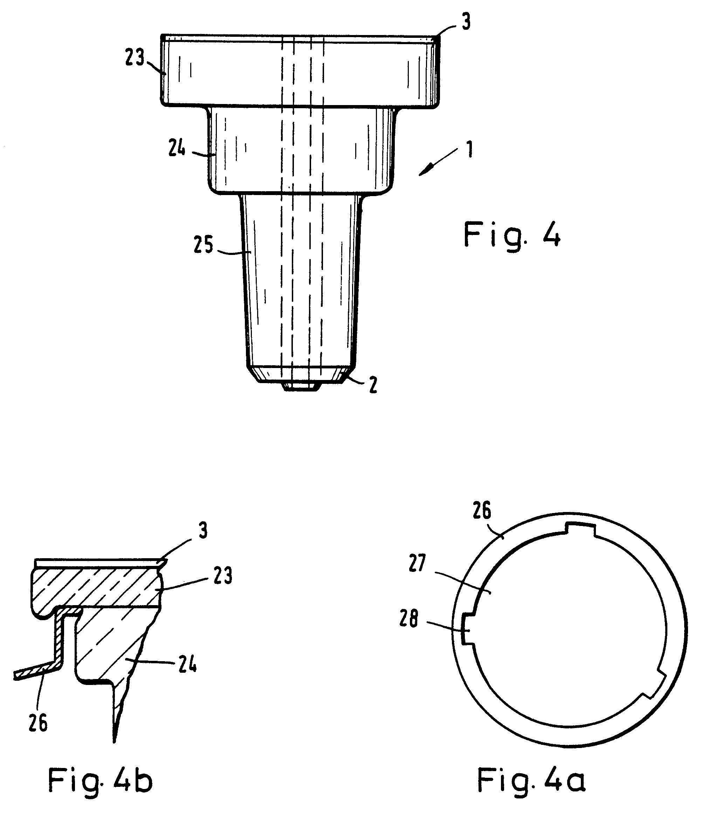

Bei den Ausführungsformen nach Fig. 4 bis 6 ist der Einfachheit halber jeweils nur der Gummistopfen 1 dargestellt. Bei der Ausführungsform nach Fig. 4 wird der Gummistopfen 1 durch drei Abschnitte von unterschiedlichem Durchmesser gebildet. Der oberste Abschnitt 23 mit größtem Durchmesser ist scheibenförmig ausgebildet und durch einen Absatz vom mittleren Abschnitt 24 abgesetzt, der etwas konisch ausgebildet ist, während der Abschnitt 23 eine zylindrische Umfangsfläche haben kann. Über einen weiteren Absatz schließt sich ein konischer Abschnitt 25 an, der eine größere Längsabmessung als die anderen Abschnitte 23 und 24 hat. Die Abschnitte 23 bis 25 können aus dem gleichen Gummimaterial bestehen, vorzugsweise bestehen sie aus unterschiedlich hartem Gummimaterial. Der Abschnitt 23 besteht vorzugsweise aus weichem Gummimaterial, der Abschnitt 24 aus härterem und der Abschnitt 25 aus einem noch härteren Gummimaterial, wobei der längere Abschnitt 25 wiederum in Abschnitte unterschiedlicher Härte unterteilt sein kann, wie dies anhand der Fig. 1 beschrieben wurde.

Der Gummistopfen 1 nach Fig. 4 dient insbesondere zum Abdichten von Öffnungen, deren Innenfläche nicht glatt ist. Fig. 4a zeigt eine Draufsicht auf eine derartige Öffnung bei einem Kraftfahrzeugkühler. Der vom Kühlerstutzen 26 umgebene Öffnungsquerschnitt 27 weist Ausschnitte 28 auf, in die entsprechende Vorsprünge am Kühlverschluß eingreifen. Wegen dieser Ausschnitte 28 kann der Öffnungsquerschnitt 27 durch Anlage des Gummistopfens 1 auf seinem Umfang entsprechend Fig. 1 nicht abgedichtet werden. Um dennoch eine Abdichtung zu erzielen, wird der Gummistopfen nach Fig. 4 so eingesetzt, daß beim Aufweiten des Gummistopfens durch Zusammendrücken mittels der Exzenterhebel 7 der Abschnitt 24 am Innenumfang des Öffnungsquerschnitts 27 zum Anliegen kommt und den Gummistopfen in der Öffnung hält, wie es Fig. 4b zeigt. Gleichzeitig wird der scheibenförmige Abschnitt 23 über den oberen Rand des Kühlerstutzens 26 gedrückt, so daß auf dessen oberer Seite die Abdichtung erfolgt, wie dies auch aus Fig. 4b ersichtlich ist. In entsprechender Weise können Kühler- bzw. Tanköffnungen und dergl. mit einem groben Innengewinde oder anderen Unregelmäßigkeiten am oberen Rand abgedichtet werden. Der konische Abschnitt 25 am Gummistopfen 1 der Fig. 4 dient zum Abdichten von Öffnungen mit glattem Innenrand entsprechend Fig.1.

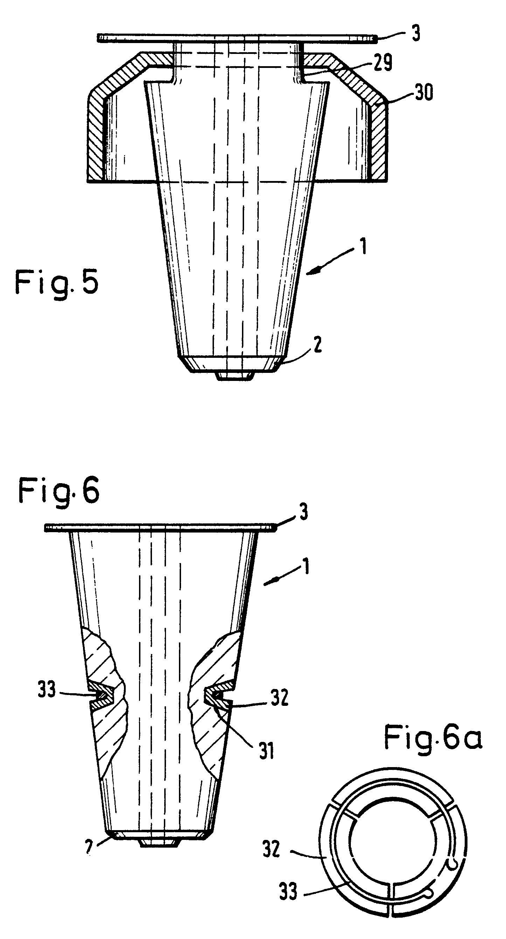

Die Fig. 5 zeigt eine Ausführungsform, bei der am oberen Ende des Gummistopfens 1 ein Abschnitt 29 mit reduziertem Durchmesser ausgebildet ist, an dem der nach innen ragende Flansch einer Überwurfmutter 30 anliegt. Im entspannten Zustand des Gummistopfens 1 ist die Überwurfmutter 30 relativ zum Gummistopfen 1 beweglich, während bei aufgeweitetem Gummistopfen 1 der Abschnitt 29 am Flansch der Mutter zum Anliegen kommt und diese fixiert. Diese Ausführungsform ist insbesondere für glatte konische Öffnungen vorgesehen, die mit einem Außengewinde versehen sind, auf das die Überwurfmutter 30 zum Halten des Gummistopfens in der Öffnung aufgeschraubt werden kann. Die Abdichtung erfolgt durch den sich aufweitenden Gummistopfen. Wird ein mit Flüssigkeit gefüllter Hohlraum auf Dichtigkeit überprüft, wie beispielsweise ein Autokühler, so kann beim Entspannen des Gummistopfens 1 Wasser aus der Öffnung entweichen, das durch die Überwurfmutter 30 nach unten abgelenkt wird. Nach dem Entspannen des überprüften Hohlraumes kann dann die Überwurfmutter 30 abgeschraubt werden.

Die Fig. 6 zeigt eine andere Ausführungsform, die insbesondere für konische glatte Öffnungen geeignet ist, die gegebenenfalls auch schmierig sein können, so daß der aufgeweitete Gummistopfen 1 keinen Halt findet. Auf dem Umfang des Gummistopfens 1 ist eine Ringnut 31 ausgebildet, die etwa einen V-Querschnitt hat. In dieser Ringnut 31 sind Ringsegmente 32 angeordnet, deren Querschnitt dem der Ringnut 31 entspricht und die aus einem Material mit erhöhtem Reibungskoeffizienten bestehen oder wenigstens auf der Außenseite einen Belag mit erhöhtem Reibungskoeffizienten aufweisen. z. B. können auf der Außenseite der Ringsegmente 32 Metallkörner eingelagert oder es kann ein Belag aus Carborundum aufgebracht sein. Beim Stauchen des Gummistopfens 1 mittels der Exzenterhebel 7 werden aufgrund der schrägen Seitenflanken der Ringnut 31 und der entsprechenden Flächen der Ringsegmente 32 diese nach außen gedrückt, wobei sie an die nicht dargestellte konische Öffnungswand angepreßt werden und den Gummistopfen 1 in der Öffnung halten, während die anderen Abschnitte des Gummistopfens 1 diese abdichten. Die Ringsegmente 32 werden zweckmäßigerweise durch einen Federring 33 in der Ringnut 31 gehalten, wie Fig. 6a zeigt. Über die Länge des Gummistopfens 1 können auch mehrere solche Ringnuten mit darin eingesetzten Ringsegmenten 32 vorgesehen werden.

**Patentansprüche**

1. Prüfgerät für Rohrleitungen oder andere, auf Dichtigkeit zu prüfende Hohlräume, mit einem wenigstens teilweise konischen Gummistopfen (1), an dessen gegenüberliegenden Enden jeweils eine Auflageplatte (2, 3) vorgesehen ist, wobei eine sich durch den Gummistopfen erstreckende Rohrleitung (4) mit der Auflageplatte (2) an dem Ende mit kleinerem Durchmesser fest verbunden und durch die andere Auflageplatte (3) verschiebbar geführt ist, auf dem überstehenden Abschnitt mit einem Gewinde versehen und auf dem Gewindeabschnitt (5) ein Lagerbock (6) aufgeschraubt ist, an dem diametral gegenüberliegend Exzenterhebel (7) angelenkt sind, die auf der Auflageplatte am größeren Durchmesser des Gummistopfens (1) aufliegen, gekennzeichnet durch einen Aufsatzteil, der auf dem über den Lagerbock (6) vorstehenden Ende des Gewindeabschnitts (5) der Rohrleitung (4) aufschraubbar ist, und der durch ein Rohrstück mit einem Ventil (10) am freien Ende gebildet ist, wobei seitlich an dem Rohrstück ein Manometer (11) und ein Schnellkupplung aufweisendes Überdruckventil (12) angeordnet sind, und durch eine CO-Prüfvorrichtung (16), die einen mit einem Prüfmedium gefüllten Behälter (19) aufweist und die in Verbindung mit der Schnellkupplung des Überdruckventils steht, wobei zwischen Schnellkupplung (15) und Behälter (19) ein Abscheider (34) vorgesehen ist.

2. Prüfgerät nach Anspruch 1,
dadurch gekennzeichnet,
daß zwischen Abscheider (34) und Behälter (19) ein Rückschlagventil (18) vorgesehen ist.

3. Prüfgerät nach den Ansprüchen 1 und 2,
dadurch gekennzeichnet,
daß der wenigstens teilweise konische Gummistopfen (1) aus wenigstens zwei Abschnitten (21, 22) mit unterschiedlicher Härte zusammengesetzt ist, wobei der Abschnitt mit kleinerem Durchmesser aus härterem Material besteht.

4. Prüfgerät nach den Ansprüchen 1 bis 4,
dadurch gekennzeichnet,
daß der Gummistopfen (1) wenistens einen Absatz zwischen einem Abschnitt (23) mit größerem Durchmesser und einen Abschnitt (24) mit kleinerem Durchmesser aufweist.

5. Prüfgerät nach den Ansprüchen 1 bis 3,
dadurch gekennzeichnet,
daß am oberen Ende des Gummistopfens (1) auf einem Abschnitt (29) mit reduziertem Durchmesser der nach innen ragende Flansch einer Überwurfmutter (30) angeordnet ist, die auf dem entspannten Gummistopfen relativ zu diesem beweglich ist.

6. Prüfgerät nach den vorhergehenden Ansprüchen,
dadurch gekennzeichnet,
daß auf dem Umfang des Gummistopfens (1) wenigstens eine Ringnut (31) mit etwa V-förmigem Querschnitt ausgebildet ist, und daß in der Ringnut Ringsegmente (32) angeordnet sind, deren Querschnitt dem der Ringnut entspricht und die auf der Außenseite einen erhöhten Reibungskoeffizienten aufweisen.

7. Prüfgerät nach Anspruch 6,
dadurch gekennzeichnet,
daß die Ringsegmente (32) durch einen sie umgreifenden Federring (33) in der Ringnut gehalten sind.

## Claims

1. Testing apparatus for pipes or other hollow spaces to be tested for leakproofness, having an at least partially conical rubber plug (1), at each of the opposite ends of which a bearing plate (2, 3) is provided, a pipe (4) extending through the rubber plug being rigidly connected to the bearing plate (2) at the end of smaller diameter and being guided displaceably by the other bearing plate (3), being provided on the protruding section with a thread, and a bearing block (6) being screwed on the threaded section (5), on which bearing block diametrically opposite eccentric levers (7) are articulated which rest on the bearing plate (3) at the larger diameter of the rubber plug (1), characterized by an attachment part which can be screwed onto that end of the threaded section (5) of the pipe (4) which protrudes above the bearing block (6) and is formed by a pipe piece having a valve (10) on the free end, a manometer (11) and a pressure control valve (12) having a rapid-action coupling being arranged laterally on the pipe piece, and by a CO testing device (16) which has a container (19) filled with a test medium and is connected to the rapid-action coupling of the pressure controlvalve, a trap (34) being provided between the rapid-action coupling (15) and the container (19).

2. Test apparatus according to Claim 1, characterized in that a non return valve (18) is provided between trap (34) and container (19).

3. Test apparatus according to Claims 1 and 2, characterized in that the at least partially conical rubber plug (1) is composed of at least two sections (21, 22) of different hardness, the section of smaller diameter being composed of harder material.

4. Test apparatus according to Claims 1 to 3, characterized in that the rubber plug (1) has at least one step between a section (23) of larger diameter and a section (24) of smaller diameter.

5. Test apparatus according to Claims 1 to 3, characterized in that the inward-projecting flange of a retaining nut (30) which can be moved on and relative to the relaxed rubber plug is arranged at the upper end of the rubber plug (1) on a section (29) of reduced diameter.

6. Test apparatus according to the preceding claims, characterized in that at least one annular groove (31) of approximately V-shaped cross-section is formed on the circumference of the rubber plug (1), and in that annular segments (32), the cross-section of which corresponds to that of the annular groove and which, on the outside, have an increased coefficient of friction, are arranged in the annular groove.

7. Test apparatus according to Claim 6, characterized in that the annular segments (32) are held in the annular groove by a spring washer (33) which fits round them.

**Revendications**

1. Dispositif d'essai pour conduites annulaires ou autres espaces creux à tester en ce qui concerne leur étanchéité, comprenant un bouchon de caoutchouc (1) au moins partiellement conique, aux extrémités opposées duquel sont prévues des plaques d'appui (2, 3), tandis qu'une conduite tubulaire (4) qui s'étend à travers le bouchon de caoutchouc est reliée fermement à la plaque d'appui 2 à l'extrémité de plus petit diamètre et est guidée de façon coulissante dans l'autre plaque d'appui (3), un bloc d'appui (6) étant vissé sur la section en saillie vers le haut qui est munie d'un filetage et sur la section filetée (5), bloc sur lequel sont articulés des leviers excentrés (7) situés diamétralement à l'opposé l'un de l'autre, qui s'appliquent sur la plaque d'appui (3) de plus grand diamètre du bouchon de caoutchouc (1), caractérisé en ce qu'un élément rapporté pouvant être vissé sur l'extrémité de la section filetée (5) de la conduite tubulaire (4) qui est en saillie au-dessus du bloc de support (6) et formée par un élément de tube comprenant une valve (10) à son extrémité libre, un manomètre (11) et une soupape de surpression (12) à accouplement rapide étant disposés latéralement sur l'élément de tube, et en ce qu'un dispositif de détection de CO (16) comprenant un récipient (19) rempli d'un agent d'essai est en liaison avec l'accouplement rapide de la soupape de surpression, un dispositif de séparation (34) étant prévu entre l'accouplement rapide (15) et le récipient (19).

2. Dispositif d'essai selon la revendication 1, caractérisé en ce qu'il est prévu entre le dispositif de séparation (34) et le récipient (19) un clapet de non-retour (18).

3. Dispositif d'essai selon les revendications 1 et 2, caractérisé en ce que le bouchon de caoutchouc (1) qui est au moins partiellement conique est constitué par l'assemblage de deux sections (21, 22) de duretés différentes, la section de diamètre plus petit étant constituée en un matériau plus dur.

4. Dispositif d'essai selon l'une quelconque des revendications 1 à 3, caractérisé en ce que le bouchon de caoutchouc (1) comprend au moins un gradin entre une section (23) de plus grand diamètre et une section (24) de plus petit diamètre.

5. Dispositif d'essai selon l'une quelconque des revendications 1 à 3, caractérisé en ce que sur l'extrémité supérieure du bouchon de caoutchouc (1) et sur une section (29) de diamètre réduit est disposée la bride en saillie vers l'intérieur d'un écrou d'accouplement (30) qui peut se déplacer relativement par rapport au bouchon de caoutchouc quand il est à l'état détendu.

6. Dispositif d'essai selon l'une quelconque des revendications précédentes, caractérisé en ce qu'il est constitué sur la périphérie du bouchon de caoutchouc (1) au moins une rainure annulaire (31) ayant une section sensiblement en forme de V, et en ce que sont disposés dans la rainure annulaire des segments annulaires (32) dont la section correspond à celle de la rainure annulaire et qui présentent sur leur côté interne un coefficient de frottement plus élevé.

7. Dispositif d'essai selon la revendication 6, caractérisé en ce que les segments annulaires (32) sont maintenus dans la rainure annulaire par une bague élastique (33) qui les entoure.

Fig.1

Fig. 2

Fig. 3

Fig. 4

Fig. 4b

Fig. 4a

Fig. 5

Fig. 6

Fig. 6a